# EUROPEAN PATENT APPLICATION

(11) **EP 4 586 086 A1**
(43) Date of publication of application: **16.07.2025**
(21) Application number: 23917144.0
(22) Date of filing: 03.11.2023
(51) Int. Cl.: G06F 9/451, G06F 9/445

(54) **WINDOW MANAGEMENT METHOD AND ELECTRONIC DEVICE**

(30) Priority: 17.01.2023 CN 202310096400
(71) Applicant: Huawei Technologies Co., Ltd., Shenzhen, Guangdong 518129 (CN)
(72) Inventor: CHEN, Haiying, Shenzhen, Guangdong 518129 (CN); QIAN, Liangfang, Shenzhen, Guangdong 518129 (CN); LIU, Chao, Shenzhen, Guangdong 518129 (CN)
(74) Representative: Gill Jennings & Every LLP
(86) International application number: PCT/CN2023/129563
(87) International publication number: WO 2024/152676

(57) **Abstract**

This application provides a window management method and an electronic device. The method is applied to an electronic device. The method includes: creating a first window in response to a first operation that a user starts a first application, where the first window is a preview window of the first application, and the first window includes a first layer and a second layer; drawing a first start interface at the second layer; displaying the first start interface; loading an application process of the first application, to create a third layer and start the first application; and replacing the second layer with the third layer, to display a first interface of the first application. **In** this way, an application start speed can be increased, and user experience is improved.

## Description

This application claims priority to Chinese Patent Application No. 202310096400.6, filed with the China National Intellectual Property Administration on January 17, 2023 and entitled "WINDOW MANAGEMENT METHOD AND ELECTRONIC DEVICE", which is incorporated herein by reference in its entirety.

### TECHNICAL FIELD

This application relates to the field of electronic devices, and more specifically, to a window management method and an electronic device.

### BACKGROUND

With advancement of technologies, an electronic device has become an indispensable part of daily life of a user. The electronic device may start an application in response to an operation that the user starts the application. When starting the application, the electronic device may display a start interface in an animation form, including: the start interface is gradually scaled up, the start interface changes from being blurred to being clear, or the like. After the application is started, the electronic device may display a graphical user interface (graphical user interface, GUI) for an interaction with the user. The electronic device may further exit the application in response to an operation that the user exits the application. When exiting the application, the electronic device may also display an exit interface in an animation form, including: the exit interface is gradually scaled down, the exit interface gradually becomes blurred, and the like. For the user, whether the electronic device is smooth depends on whether the electronic device can quickly respond after the user performs an operation, that is, a touch sensitivity of the electronic device. Currently, the touch sensitivity of the electronic device is poor, and consequently, use experience of the user becomes poor.

### SUMMARY

This application provides window management and an electronic device, to quickly respond to an operation of a user, improve a touch sensitivity of the electronic device, and improve user experience.

According to a first aspect, a window management method is provided. The method is applied to an electronic device, and the method includes: creating a first window in response to a first operation that a user starts a first application, where the first window is a preview window of the first application, the first window includes a first layer and a second layer, the first layer is used for an animation operation, the first layer is mounted on a screen node, and the second layer is mounted at the first layer; drawing a first start interface at the second layer; displaying the first start interface; loading an application process of the first application, to create a third layer and start the first application; and replacing the second layer with the third layer, to display a first interface of the first application, where the first interface of the first application is drawn at the third layer.

In this embodiment of this application, the electronic device may create only one window when starting the first application. The electronic device may display the first start interface in the window, and then display the first interface of the first application through layer replacement after the application process of the first application is loaded, without a need to additionally create a new window. In this way, resource consumption can be reduced, an application start speed is improved, and user experience is improved. In addition, because the second layer and the third layer are mounted at the first layer, the second layer and the third layer can inherit an animation attribute of the first layer. Therefore, when switching from the first start interface to the first interface of the first application, the electronic device may modify only the animation attribute of the first layer, without a need to perceive a transformation between the second layer and the third layer.

With reference to the first aspect, in some implementations of the first aspect, a second operation that the user exits the first application is detected in a process of loading the application process of the first application, and the method further includes: drawing a first exit interface at the second layer; displaying the first exit interface; caching the second operation; and after the application process of the first application is loaded, performing the second operation to exit the first application and hide the first window.

In this embodiment of this application, if the electronic device detects, in a process of starting the first application, an operation that the user exits the first application, the electronic device may first display the first exit interface and cache the operation of the user, and after the first application is started, perform the operation of exiting the first application. Because displaying of the first exit interface by the electronic device is no longer coupled to a life cycle of an application, the first exit interface is no longer lost, to improve a touch sensitivity of the electronic device, and improve user experience.

With reference to the first aspect, in some implementations of the first aspect, the second operation is an operation of closing the first application, a third operation that the user starts the first application is detected in a process of closing the first application, and the method further includes: creating a second window, where the second window is a preview window of the first application, the second window includes a fourth layer and a fifth layer, the fourth layer is used for an animation operation, the fourth layer is mounted on the screen node, and the fifth layer is mounted at the fourth layer; drawing the first start interface at the fifth layer; displaying the first start interface; caching the third operation; after the first application is closed, performing the third operation to create a sixth layer and start the first application; and replacing the fifth layer with the sixth layer, to display the first interface of the first application, where the first interface of the first application is drawn at the sixth layer.

In this embodiment of this application, if the electronic device detects, in the process of closing the application, the third operation that the user starts the application, the electronic device may first display the first start interface and cache the third operation of the user, and after the application is closed, perform the third operation of starting the first application, to avoid a problem that a final state of the first application is inconsistent with the third operation of the user because the electronic device discards the third operation, improve a touch sensitivity of the electronic device, and improve user experience.

With reference to the first aspect, in some implementations of the first aspect, the second operation is an operation of exiting the first application to the background, a third operation that the user starts the first application is detected in a process of exiting the first application to the background, and the method includes: displaying the first interface of the first application; caching the third operation; and after the first application is exited to the background, performing the third operation to start the first application.

In this embodiment of this application, if the electronic device detects, in a process of exiting the first application to the background, the third operation that the user starts the first application, the electronic device may first display the first interface of the first application and cache the third operation of the user, and after the first application is exited to the background, perform the third operation of starting the first application, to avoid a problem that a final state of the first application is inconsistent with the third operation of the user because the electronic device discards the third operation, improve a touch sensitivity of the electronic device, and improve user experience.

With reference to the first aspect, in some implementations of the first aspect, the second operation is an operation of exiting the first application to the background, a third operation that the user starts the first application is detected in a process of exiting the first application to the background, and the method further includes: displaying the first interface of the first application; caching the third operation; when the electronic device is still in the process of exiting the application to the background and a fourth operation that the user exits the first application to the background is further detected, drawing the first exit interface at the third layer in response to the fourth operation; displaying the first exit interface; caching the fourth operation; after the first application is exited to the background, determining, based on a sequence of performing the third operation and the fourth operation by the user, that an operation of the user is the fourth operation; and discarding the fourth operation.

In this embodiment of this application, if the electronic device detects, in a process of exiting the first application to the background, the third operation that the user starts the first application, the electronic device may first display the first interface of the first application in an animation form and cache the third operation of the user. If the electronic device further detects the fourth operation that the user exits the first application to the background and the electronic device is still in the process of exiting the first application to the background, the electronic device may display the first exit interface again and cache the fourth operation, to improve a touch sensitivity of the electronic device, and improve user experience. In addition, after the first application is exited to the background, it is determined that the fourth operation is an operation of the user. In addition, because the fourth operation corresponds to a state of the first application, the fourth operation may be discarded, to ensure that the state of the first application corresponds to a latest operation of the user.

With reference to the first aspect, in some implementations of the first aspect, the second operation is an operation of exiting the first application to the background, a third operation that the user starts the first application is detected in a process of exiting the first application to the background, and the method further includes: displaying the first interface of the first application; caching the third operation; when the electronic device is still in the process of exiting the first application to the background and a fifth operation that the user closes the first application is detected, replacing the third layer with the second layer in response to the fifth operation; drawing the first exit interface at the second layer; displaying the first exit interface; caching the fifth operation; after the first application is exited to the background, determining, based on a sequence of performing the third operation and the fifth operation by the user, that an operation of the user is the fifth operation; and performing the fifth operation to close the first application.

In this embodiment of this application, if the electronic device detects, in a process of exiting the first application to the background, the third operation that the user starts the first application, the electronic device may first display the first interface of the first application in an animation form and cache the third operation of the user. If the electronic device further detects the fifth operation that the user closes the first application and the electronic device is still in the process of exiting the first application to the background, the electronic device may display the first exit interface again and cache the fifth operation, to improve a touch sensitivity of the electronic device, and improve user experience. In addition, after the first application is exited to the background, it is determined that the fifth operation is an operation of the user. In addition, because the fifth operation does not correspond to a state of the first application, the fifth operation may be performed, to ensure that the state of the first application corresponds to a latest operation of the user.

With reference to the first aspect, in some implementations of the first aspect, the second operation is an operation of closing the first application, a third operation that the user starts the first application is detected in a process of closing the first application, and the method further includes: creating a second window, where the second window is a preview window of the first application, the second window includes a fourth layer and a fifth layer, the fourth layer is used for an animation operation, the fourth layer is mounted on the screen node, and the fifth layer is mounted at the fourth layer; drawing the first start interface at the fifth layer; displaying the first start interface; caching the third operation; when the electronic device is still in the process of closing the first application and a fifth operation that the user closes the first application is further detected, drawing the first exit interface at the fifth layer in response to the fifth operation; displaying the first exit interface; caching the fifth operation; after the first application is closed, determining, based on a sequence of performing the third operation and the fifth operation by the user, that an operation of the user is the fifth operation; and discarding the fifth operation.

In this embodiment of this application, if the electronic device detects, in a process of closing the first application, the third operation that the user starts the first application, the electronic device may create the second window to display the first start interface and cache the third operation of the user. If the electronic device further detects the fifth operation that the user closes the first application and the electronic device is still in the process of closing the first application, the electronic device may display the first exit interface again and cache the fifth operation, to improve a touch sensitivity of the electronic device, and improve user experience. In addition, after the first application is closed, it is determined that the fifth operation is an operation of the user. In addition, because the fifth operation corresponds to a state of the first application, the fifth operation may be discarded, to ensure that the state of the first application corresponds to a latest operation of the user.

With reference to the first aspect, in some implementations of the first aspect, the second operation is an operation of exiting the first application to the background, a sixth operation that the user starts a second application is detected in a process of exiting the first application to the background, and the method further includes: creating a third window, where the third window is a preview window of the second application, the third window includes a seventh layer and an eighth layer, the seventh layer is used for an animation operation, the seventh layer is mounted on the screen node, and the eighth layer is mounted at the seventh layer; drawing a second start interface at the eighth layer; displaying the second start interface; caching the sixth operation; after the first application is exited to the background, performing the sixth operation to create a ninth layer and start the second application; and replacing the eighth layer with the ninth layer, to display a first interface of the second application, where the first interface of the second application is drawn at the ninth layer.

In this embodiment of this application, if the electronic device detects, in a process of exiting the first application to the background, the sixth operation that the user starts a second application, the electronic device may first display the second start interface in an animation form and cache the sixth operation of the user. After the first application is exited to the background, the electronic device performs the sixth operation, to ensure that the sixth operation is performed.

With reference to the first aspect, in some implementations of the first aspect, a second operation that the user exits the first application is detected in a process of loading the application process of the first application, and the method further includes: drawing a first exit interface at the second layer; displaying the first exit interface; caching the second operation; when the electronic device is still in the process of loading the application process of the first application and a third operation that the user starts the first application is detected, drawing the first start interface at the second layer in response to the third operation; displaying the first start interface; caching the third operation; after the application process of the first application is loaded, determining, based on a sequence of performing the second operation and the third operation by the user, that an operation of the user is the third operation; and discarding the third operation.

In this embodiment of this application, if the electronic device detects, in a process of loading the application process, the second operation that the user exits the first application, the electronic device may first display the first exit interface and cache the third operation of the user. If the electronic device further detects the fourth operation that the user exits the first application and the electronic device is still in the process of exiting the first application, the electronic device may display the first exit interface again and cache the fourth operation, to improve a touch sensitivity of the electronic device, and improve user experience. In addition, after the first application is exited, it is determined that the fourth operation is an operation of the user. In addition, because the fourth operation corresponds to a state of the first application, the fourth operation may be discarded, to ensure that the state of the application corresponds to a latest operation of the user.

With reference to the first aspect, in some implementations of the first aspect, after the application process of the first application is loaded, an operation that the user closes the first application is detected, and the method further includes: replacing the third layer with the second layer; drawing the first exit interface at the second layer; and displaying the first exit interface, and closing the application.

In this embodiment of this application, when the application is closed, the electronic device may replace the third layer with the second layer, and draw the first exit interface at the second layer, so that the application process is decoupled from the first exit interface. Even if the application process is closed in advance, the first exit interface may still maintain integrity and does not suddenly disappear, to improve user experience.

With reference to the first aspect, in some implementations of the first aspect, after the application process of the first application is loaded, an operation that the user exits the first application to the background is detected, and the method further includes: drawing the first exit interface at the third layer; and displaying the exit interface, and exiting the application to the background.

With reference to the first aspect, in some implementations of the first aspect, the replacing the second layer with the third layer includes: replacing the second layer with the third layer after the first interface of the application is drawn at the third layer.

With reference to the first aspect, in some implementations of the first aspect, the first exit interface is a screenshot of a second interface of the application or a preset interface.

According to a second aspect, an embodiment of this application provides an electronic device. The electronic device includes modules/units that perform the methods according to the foregoing aspects or the method according to any possible design of the foregoing aspects. These modules/units may be implemented by using hardware, or may be implemented by executing corresponding software by using hardware.

According to a third aspect, an embodiment of this application provides a chip. The chip is coupled to a memory in an electronic device, and is configured to: invoke a computer program stored in the memory and perform the technical solutions according to the foregoing aspects and any possible design of the foregoing aspects of this embodiment of this application. In this embodiment of this application, "coupling" means that two components are directly or indirectly combined with each other.

According to a fourth aspect, an embodiment of this application provides a computer-readable storage medium. The computer-readable storage medium includes a computer program. When the computer program is run on an electronic device, the electronic device is enabled to perform the technical solution according to the foregoing aspects and any possible design of the foregoing aspects.

According to a fifth aspect, an embodiment of this application provides a computer program. The computer program includes instructions. When the instructions are run on a computer, the computer is enabled to perform the technical solution according to any one of the foregoing aspects and the possible designs of the foregoing aspects.

According to a sixth aspect, an embodiment of this application provides an electronic device. The electronic device includes one or more processors and one or more memories. The one or more memories store one or more computer programs, the one or more computer programs include instructions, and when the instructions are executed by the one or more processors, the foregoing aspects or any possible of the foregoing aspects is performed.

For beneficial effects of the second aspect to the sixth aspect, refer to the beneficial effects of the first aspect. Details are not described again.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a schematic flowchart in which an electronic device starts an application and exits the application;
FIG. 4 is a diagram in which an electronic device creates a first window and a second window;
FIG. 5 is a schematic flowchart of a window management method according to an embodiment of this application;
FIG. 6 is a diagram of a layer change of a first window when an electronic device starts an application and closes the application according to an embodiment of this application;
FIG. 7 is a diagram of an internal data flow direction in a window management method according to an embodiment of this application;
FIG. 8 is a diagram of an internal data flow direction in another window management method according to an embodiment of this application;
FIG. 9 is a diagram of an internal data flow direction in another window management method according to an embodiment of this application;
FIG. 10 is a diagram of an internal data flow direction in another window management method according to an embodiment of this application;
FIG. 11 is a diagram of an internal data flow direction in another window management method according to an embodiment of this application;
FIG. 12 is a diagram of an internal data flow direction in another window management method according to an embodiment of this application;
FIG. 13 is a diagram of an internal data flow direction in another window management method according to an embodiment of this application;
FIG. 14 is a diagram of an internal data flow direction in another window management method according to an embodiment of this application; and

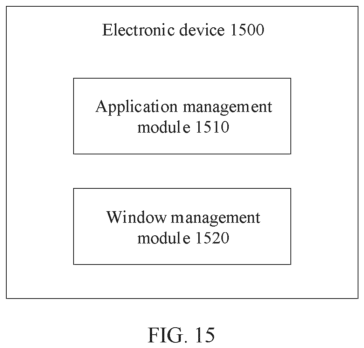

FIG. 15 is a diagram of a structure of an electronic device according to an embodiment of this application.

### DESCRIPTION OF EMBODIMENTS

Terms used in the following embodiments are merely intended to describe particular embodiments, but are not intended to limit this application. The terms "one", "a", "the", "the foregoing", and "this" of singular forms used in the specification and the appended claims of this application are also intended to include an expression form, for example, "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements "in one embodiment", "in some embodiments", "in some other embodiments", "in other embodiments", and the like in the differences in this specification do not necessarily mean the same embodiment, but mean "one or more but not all embodiments", unless otherwise specially emphasized in other ways. Terms "include", "comprise", "have", and variations thereof all mean "including but not limited to", unless otherwise specified.

The following describes an electronic device, a user interface used for the electronic device, and embodiments used for using the electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of a portable electronic device includes but is not limited to a portable electronic device using iOS^{®}, Android^{®}, Microsoft^{®}, or another operating system. The portable electronic device may alternatively be another portable electronic device, like a laptop (Laptop). It should be further understood that, in some other embodiments, the foregoing electronic device may not be the portable electronic device but a desktop computer.

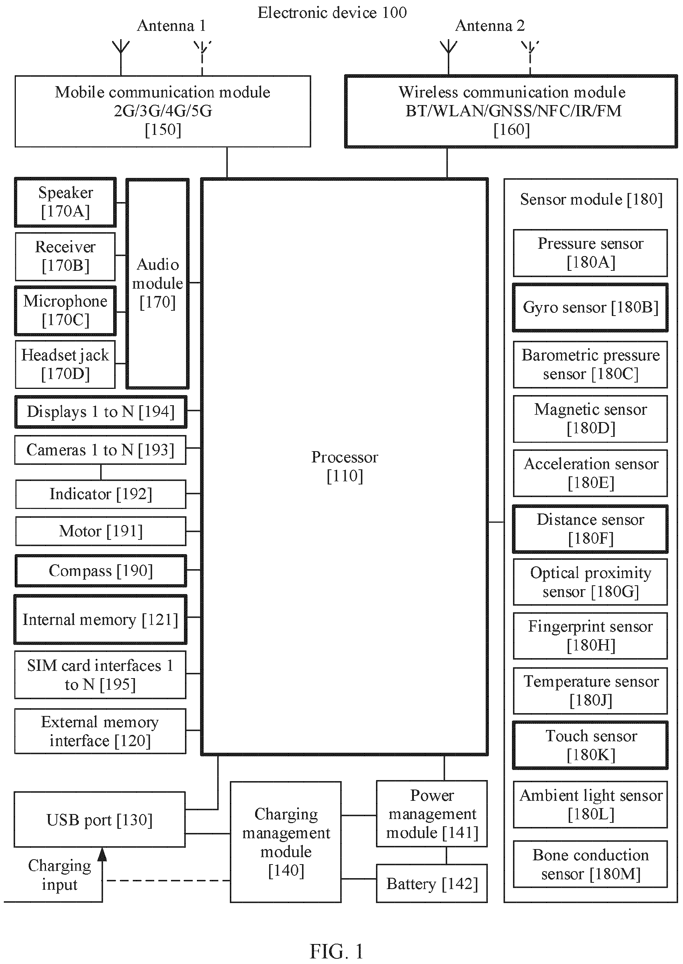

For example, FIG. 1 is a diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It can be understood that the structure shown in this embodiment of this application does not constitute a specific limitation on the electronic device 100. In some other embodiments of this application, the electronic device 100 may include more or fewer components than those shown in the figure, some components may be combined, or some components may be divided, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 100 may alternatively include one or more processors 110. The controller may generate an operation control signal based on instruction operation code and a time sequence signal, to complete control of instruction fetching and instruction execution. In some other embodiments, a memory may further be disposed in the processor 110, to store instructions and data. For example, the memory in the processor 110 may be a cache. The memory may store instructions or data that is just used or is cyclically used by the processor 110. If the processor 110 needs to use the instructions or data again, the instructions or data may be directly invoked from the memory. This avoids repeated access and reduces waiting time of the processor 110, thereby improving data processing or instruction execution efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB port, and/or the like. The USB port 130 is an interface that conforms to a USB standard specification, and may be specifically a mini USB port, a micro USB port, a USB Type C port, or the like. The USB port 130 may be configured to be connected to a charger to charge the electronic device 100, or may be configured to transmit data between the electronic device 100 and a peripheral device. The USB port 130 may alternatively be configured to be connected to a headset, to play audio by using the headset.

It can be understood that an interface connection relationship between the modules illustrative in this embodiment of this application is merely an illustrative description, and does not constitute a limitation on the structure of the electronic device 100. In some other embodiments of this application, different interface connection manners in the foregoing embodiments or a combination of a plurality of interface connection manners may alternatively be used for the electronic device 100.

The charging management module 140 is configured to receive a charging input from the charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to be connected to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

In some embodiments of this application, the display 194 in FIG. 1 is foldable when the display panel is made of a material such as an OLED, an AMOLED, or an FLED. Herein, that the display 194 may be bent means that the display may be bent to any angle at any part, and may be held at the angle. For example, the display 194 may be folded left and right from the middle. Alternatively, the display 194 may be folded up and down from the middle.

The display 194 of the electronic device 100 may be a flexible screen. Currently, the flexible screen attracts much attention due to unique features and huge potential of the flexible screen. Compared with a conventional screen, the flexible display has features of strong flexibility and bendability, and can provide the user with a new bendability-based interaction mode, to meet more requirements of the user for the electronic device. For an electronic device configured with a foldable display, the foldable display of the electronic device may be switched between a small screen in a folded form and a large screen in an unfolded form at any time. Therefore, the user uses a split-screen function more frequently on the electronic device provided with the foldable display.

The electronic device 100 can implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a transfer mode between human brain neurons; and may further continuously perform self-learning. The NPU may be used to implement applications such as intelligent cognition of the electronic device 100, for example, image recognition, facial recognition, speech recognition, and text understanding.

The external memory interface 120 may be configured to be connected to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store one or more computer programs. The one or more computer programs include instructions. The processor 110 may run the instructions stored in the internal memory 121, so that the electronic device 100 performs the method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 100, and the like. In addition, the internal memory 121 may include a high-speed random access memory, or may include a nonvolatile memory, for example, one or more magnetic disk storage devices, a flash memory, or a universal flash storage (universal flash storage, UFS). In some embodiments, the processor 110 may run the instructions stored in the internal memory 121 and/or the instructions stored in the memory that is disposed in the processor 110, to enable the electronic device 100 to perform the method provided in embodiments of this application, other applications, and data processing. The electronic device 100 may implement an audio function, for example, a music playing function and a recording function, through the audio module 170, the speaker 170A, the telephone receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (that is, axes X, Y, and Z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The acceleration sensor 180E may detect accelerations of the electronic device 100 in various directions (usually on three axes). When the electronic device 100 is still, a magnitude and a direction of gravity may be detected. The acceleration sensor 180E may be further configured to recognize a posture of the electronic device, and is applied to applications such as switching between a landscape mode and a portrait mode and a pedometer.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 100 at a location different from that of the display 194.

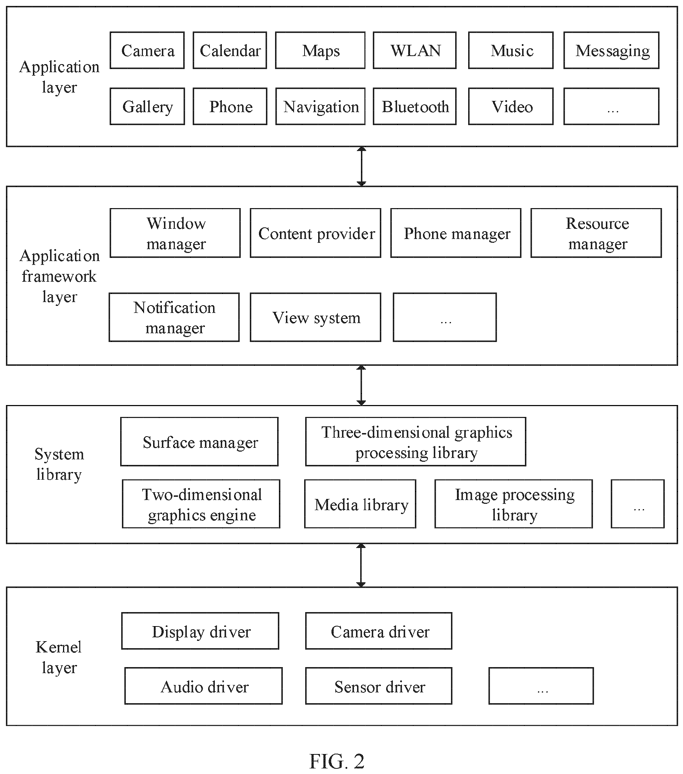

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer. The application layer may include a series of application packages.

As shown in FIG. 2, the application packages may include applications such as Camera, Gallery, Calendar, Phone, Maps, Navigation, WLAN, Bluetooth, Music, Video, and Messaging.

The application framework layer provides an application programming interface (application programming interface, API) and a programming framework for an application at the application layer, and the application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources for the application, for example, a localized string, an icon, an image, a layout file, and a video file.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, an electronic device vibrates, or an indicator blinks.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of frequently used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

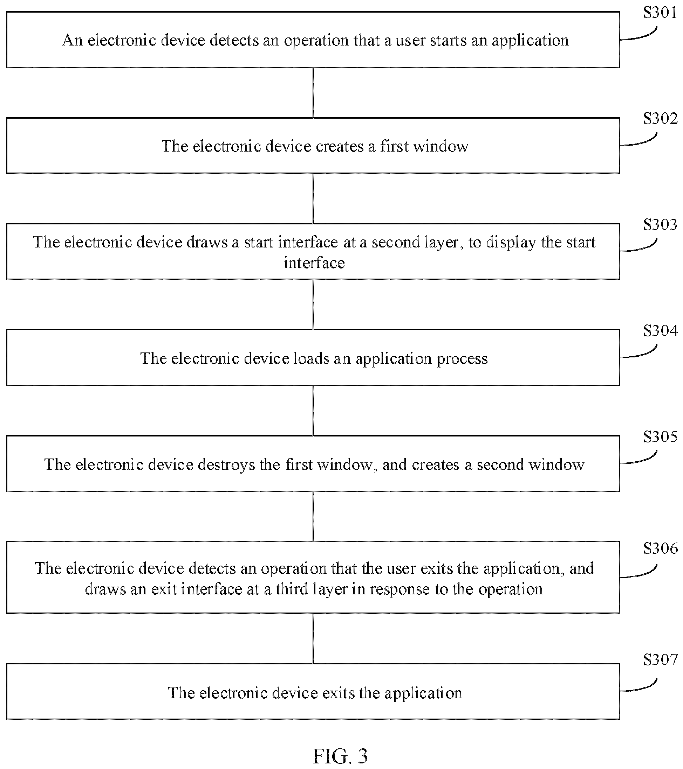

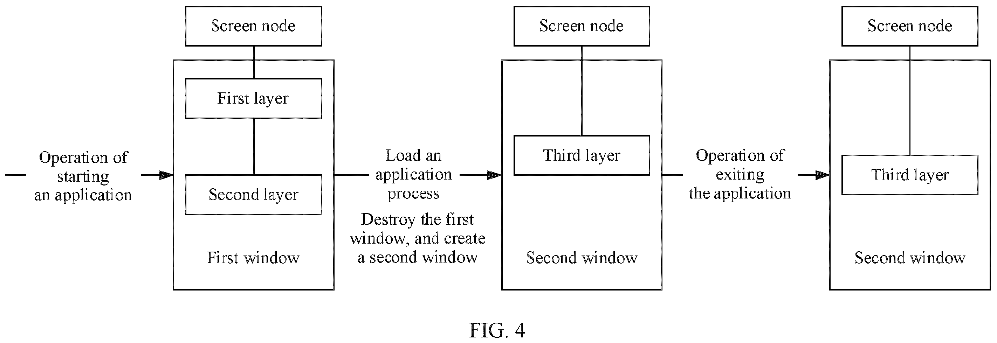

With advancement of technologies, an electronic device has become an indispensable part of daily life of a user. The electronic device may start an application in response to an operation that the user starts the application. When starting the application, the electronic device may display a start interface in an animation form, including: the start interface is gradually scaled up, the start interface changes from being blurred to being clear, or the like. After the application is started, the electronic device may display a graphical user interface (graphical user interface, GUI) for an interaction with the user. The electronic device may further exit the application in response to an operation that the user exits the application. When exiting the application, the electronic device may also display an exit interface in an animation form, including: the exit interface is gradually scaled down, the exit interface gradually becomes blurred, and the like. For the user, whether the electronic device is smooth depends on whether the electronic device can quickly respond after the user performs an operation, that is, a touch sensitivity of the electronic device. With reference to FIG. 3 and FIG. 4, the following describes a procedure in which an electronic device starts an application or exits the application.

FIG. 3 is a schematic flowchart in which an electronic device starts an application and exits the application.

S301: The electronic device detects an operation that a user starts the application.

For example, the operation that the user starts the application may be that the user taps an application icon corresponding to the application on a home screen.

For example, the operation that the user starts the application may be a voice instruction of the user.

For example, the operation that the user starts the application may be a preset gesture of the user, and the preset gesture may be a mid-air gesture.

For example, the operation that the user starts the application may be an operation that the user presses a physical button.

It should be understood that, in this embodiment of this application, the operation that the user starts the application is not limited.

S302: The electronic device creates a first window.

The electronic device may create the first window in response to detecting the operation that the user starts the application. The first window is a preview window of the application, and may also be referred to as a starting window. The first window includes a first layer and a second layer. The first layer is mounted on a screen node (displaynode) and is used for an animation operation. The second layer is mounted at the first layer, and is used to draw a start interface of an application.

For example, the first layer may be a leash window, and the second layer may be a starting window.

It should be noted that the first layer and the second layer may also be referred to as a first rendering node (surfacenode) and a second rendering node.

For example, the electronic device may draw the starting window by using a window manager service (window manager service, WMS).

S303: The electronic device draws the start interface at the second layer, to display the start interface.

After the electronic device completes drawing of the start interface at the second layer, because the second layer is mounted at the first layer, and the first layer is mounted on the screen node and is used for the animation operation, the electronic device may display the start interface in an animation form. The start interface may also be referred to as a preview image, a start interface, a preview interface, or the like.

For example, the electronic device may gradually scale up the start interface until the start interface fills a screen, and gradually reduce transparency of the start interface in a process of scaling up the start interface.

S304: The electronic device loads an application process.

The electronic device may load the application process in response to detecting the operation that the user starts the application.

S305: The electronic device destroys the first window, and creates a second window.

After loading the application process, the electronic device may destroy the first window, and create the second window. The second window is a window corresponding to the application. The second window is used to display an interface of the application. The second window includes a third layer. The third layer is mounted on the screen node, and is used to draw the interface of the application.

S306: The electronic device detects an operation that the user exits the application, and draws an exit interface at the third layer in response to the operation.

In this embodiment of this application, that the electronic device exits the application includes: The electronic device runs the application in the background, or the electronic device closes the application.

For example, the operation that the user exits the application may be that the user taps a close control in the interface of the application.

For example, the operation that the user exits the application may be a voice instruction of the user.

For example, the operation that the user exits the application may be a preset gesture of the user, and the preset gesture may be a mid-air gesture.

It should be understood that, in this embodiment of this application, an operation that the user exits the application is not limited.

After the electronic device draws the exit interface at the third layer, the electronic device may display the exit interface in an animation form.

S307: The electronic device exits the application.

After playing of the exit interface drawn in the second window is completed, the electronic device may exit the application.

FIG. 4 is a diagram in which an electronic device creates a first window and a second window.

As shown in FIG. 4, the electronic device creates the first window in response to an operation that a user starts an application. The first window includes a first layer and a second layer. After loading the application, the electronic device may destroy the first window, and create the second window. Both the first layer of the first window and a third layer of the second window may be mounted on a screen node. In response to an operation that the user exits the application, the electronic device may draw an exit interface at the third layer of the second window.

It can be learned from the foregoing descriptions that a life cycle of an application is coupled to window animation. If a user restarts the application, an electronic device needs to create a first window again, and when exiting the application, the electronic device needs to draw an exit interface in a second window. The second window is created after the electronic device loads an application process. In some scenarios, if the electronic device does not complete loading of the application process, but a user performs an operation of exiting the application, in other words, the electronic device does not create the second window, but the user performs the operation of exiting the application, the electronic device cannot draw the exit interface. Consequently, a touch sensitivity of the electronic device is poor, and user experience is reduced. In addition, when the user performs continuous start and exit operations on a single application, and the user quickly switches between a plurality of applications, because the window animation is coupled to the life cycle of the application, the life cycle of the application is blocked by the window animation. If the electronic device does not completely exit the application, but the user further performs an operation of starting the application, the electronic device may not respond to this operation of the user, thereby reducing user experience.

Based on this, an embodiment of this application provides a window management method, so that a start interface and an exit interface of an application can be decoupled from a life cycle of the application. This can improve a touch sensitivity of an electronic device, and help improve user experience.

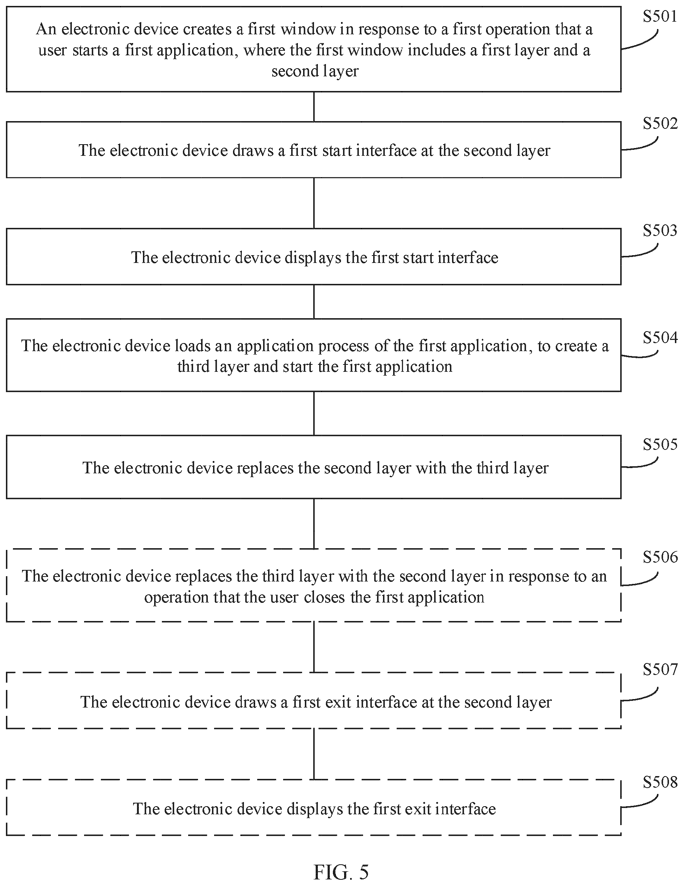

FIG. 5 is a schematic flowchart of a window management method 500 according to an embodiment of this application. As shown in FIG. 5, the method 500 includes the following steps.

S501: An electronic device creates a first window in response to a first operation that a user starts a first application.

The electronic device may create the first window in response to detecting the operation that the user starts the first application. The first window is a preview window of the first application. The first window includes a first layer and a second layer. The first layer is a root layer, and is used for an animation operation. The first layer is mounted on a screen node, and the second layer is mounted at the first layer.

For example, the operation that the user starts the first application may be that the user taps an application icon corresponding to the first application on a home screen.

For example, the operation that the user starts the first application may be a voice instruction of the user.

For example, the operation that the user starts the first application may be a preset gesture of the user, and the preset gesture may be a mid-air gesture.

For example, the operation that the user starts the first application may be an operation that the user presses a physical button.

It should be understood that, in this embodiment of this application, the operation that the user starts the first application is not limited.

S502: The electronic device draws a first start interface at the second layer.

After drawing the first window, the electronic device may draw the first start interface at the second layer.

S503: The electronic device displays the first start interface.

After the electronic device draws the first start interface at the second layer, because the second layer is mounted at the first layer, and the first layer is mounted on the screen node, the electronic device may transfer the first layer to an animation module to display, in an animation form, the first start interface drawn at the second layer. Because the electronic device displays the first start interface in the animation form, that the electronic device displays the first start interface may also be referred to as that the electronic device plays the first start animation.

For example, the electronic device may gradually scale up the first start interface until the first start interface fills a screen, and gradually reduce transparency of the first start interface in a process of scaling up the start interface.

S504: The electronic device loads an application process of the first application, to create a third layer and start the first application.

In response to the operation that the user starts the first application, the electronic device may load the application process corresponding to the first application, and may create the third layer when completing loading of the application process of the first application.

It should be noted that, in some embodiments, the electronic device may simultaneously perform S502 and S504. However, because a time period in which the electronic device loads the application process of the first application is longer than a time period in which the electronic device draws the first start interface at the second layer, the electronic device is still performing S504 when completing S502.

In some other embodiments, the electronic device may perform S502, and then perform S504.

S505: The electronic device replaces the second layer with the third layer.

After completing loading of the application process of the first application, the electronic device may create the third layer. The first interface of the first application is drawn at the third layer, and the third layer is mounted at the first layer.

In some embodiments, the electronic device creates the third layer, and replaces the second layer after drawing the first interface of the first application at the third layer.

In some other implementations, the electronic device may first replace the second layer with the third layer, and draw the first interface of the application at the third layer after completing layer replacement.

Similarly, after replacing the second layer with the third layer, the electronic device may transfer the first layer to the animation module to display, in an animation form, the first interface of the first application drawn at the third layer.

In this embodiment of this application, the electronic device may create only one window when starting the first application. The electronic device may display the first start interface in the window, and then display the first interface of the first application through layer replacement after the application process of the first application is loaded, without a need to additionally create a new window. In this way, resource consumption can be reduced, an application start speed is improved, and user experience is improved. In addition, because the second layer and the third layer are mounted at the first layer, the second layer and the third layer can inherit an animation attribute of the first layer. Therefore, when switching from the first start interface to the first interface of the first application, the electronic device may modify only the animation attribute of the first layer, without a need to perceive a transformation between the second layer and the third layer.

Optionally, in some embodiments, after the application process of the first application is loaded, an operation that the user exits the first application to the background is detected, and the method 500 further includes: S506: The electronic device draws a first exit interface at the third layer in response to the operation that the user exits the first application to the background.

For example, the operation that the user exits the first application to the background may be an operation that the user slides in a first preset direction.

For example, the operation that the user exits the first application to the background may be an operation that the user presses a physical button.

The first exit interface may be a preset image, or may be a second interface of the first application. The second interface is an interface corresponding to the first application when the user performs an operation of closing the first application.

It should be understood that, in this embodiment of this application, the operation that the user exits the first application to the background is not limited.

S507: The electronic device displays the first exit interface.

After drawing the first exit interface at the third layer, the electronic device may transfer the first layer to the animation module, to display, in an animation form, the first exit interface drawn at the third layer.

After the electronic device displays the exit interface, it can be understood that the electronic device completes playing of exit animation.

It should be noted that, in a process in which the electronic device displays the first exit interface, transparency of the first exit interface may gradually increase until the electronic device displays the home screen. In other words, after the electronic device completes playing of first exit animation, the electronic device may display the home screen.

Optionally, in some embodiments, after the application process of the first application is loaded, an operation that the user closes the first application is detected, and the method further includes:
The electronic device replaces the third layer with the second layer.
The electronic device draws an exit interface at the second layer.
The electronic device displays the first exit interface.

For example, the operation that the user closes the first application may be an operation of sliding in a second preset direction.

For example, the operation that the user closes the first application may be an operation that the user taps a close control.

After starting the first application, if the electronic device further detects the operation that the user closes the first application, the electronic device may replace the third layer with the second layer, and then draw the first exit interface at the second layer. The first exit interface may be a preset image, or may be the second interface of the first application. The second interface is an interface corresponding to the first application when the user performs the operation of closing the first application.

After drawing the first exit interface at the second layer, the electronic device may transfer the first layer to the animation module, to display, in an animation form, the first exit interface drawn at the second layer.

Optionally, the first interface of the first application and the second interface of the first application may be a same interface.

Similarly, that the electronic device displays a first exit image may also be referred to as that the electronic device plays first exit animation.

It should be noted that, that the application is exited to the background may be understood as that the application exits running in the foreground and runs in the background, and that the application is closed may be understood as that the application exits running in the foreground and does not run in the background.

Optionally, in some embodiments, the method 500 further includes: After displaying the first exit interface, the electronic device sets a state of the first window to a hidden (hide) state.

In this embodiment of this application, when the first application is closed, the electronic device may replace the third layer with the second layer, and draw the first exit interface at the second layer, so that the application process is decoupled from the first exit interface. Even if the application process is closed in advance, the first exit interface may still maintain integrity and does not suddenly disappear, to improve user experience.

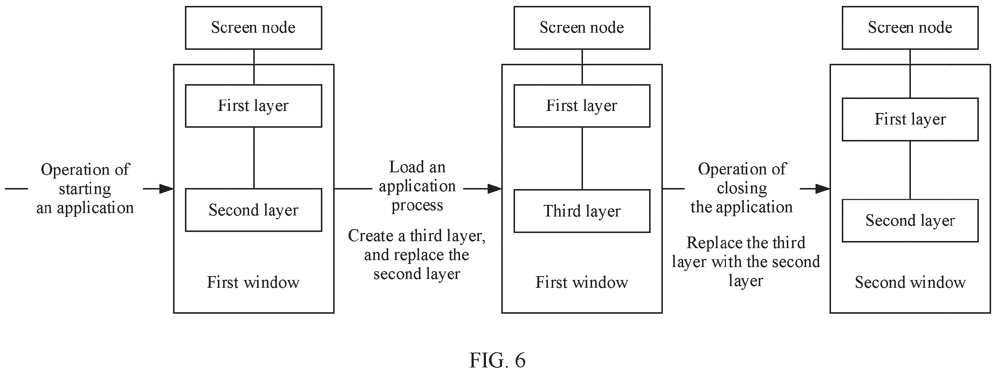

FIG. 6 is a diagram of a layer change of a first window when an electronic device starts an application and closes the application according to an embodiment of this application.

As shown in FIG. 6, the electronic device creates the first window in response to the operation that the user starts the application. The first window includes the first layer and the second layer. The electronic device may draw the start interface at the second layer, and send the interface to a screen for display at the first layer, so that the electronic device can display the start interface. After loading the application process, the electronic device may create the third layer, and replace the second layer with the third layer. The electronic device may draw the interface of the application at the third layer, and send the interface to the screen for display at the first layer, so that the electronic device can display the interface of the application. In response to the operation that the user closes the application, the electronic device may replace the third layer with the second layer, draw the exit interface at the second layer, and send the exit interface to the screen for display at the first layer.

In this embodiment of this application, the electronic device may respond to an operation that the user starts and/or exits the application, in a process of loading the application process (that is, starting the application) and a process of exiting the application (a process of exiting the application to the background and a process of closing the application). Details are described below.

Optionally, in some embodiments, if the electronic device detects, in a process of performing S504, a second operation that the user exits the first application, the method 500 further includes:
drawing a first exit interface at the second layer;
displaying the first exit interface;
caching the second operation; and
after the application process of the first application is loaded, performing the second operation to exit the application.

For example, the second operation may be an operation that the user slides in a preset direction. For example, if the second operation is an operation of exiting the first application to the background, the second operation may slide in the first preset direction. For another example, if the second operation is an operation of closing the first application, the second operation may be sliding in the second preset direction.

When loading the application process, the electronic device detects the second operation that the user exits the application, and the electronic device may draw the first exit interface at the second layer, and send the first exit interface to the screen for display at the first layer, so that the electronic device may display the first exit interface. Because the electronic device is in a process of loading the application process in this case, the electronic device may cache the second operation of exiting the first application. After the electronic device completes loading of the application process, a state of the application is a started state, and the state does not correspond to the cached second operation. In this case, the electronic device may perform the second operation to exit the application.

In this embodiment, that the electronic device displays the first exit interface includes the following several possible cases:
1. After the electronic device displays the first start interface (that is, the start animation is played), if the electronic device detects the second operation, the electronic device may draw the first exit interface at the second layer, and display the first exit interface.
2. In a process in which the electronic device displays the first start interface (that is, the start animation is being played), if the electronic device detects the second operation, the electronic device may draw the first exit interface at the second layer to switch a start interface that is being displayed.
3. In a process in which the electronic device displays the first start interface (that is, the start animation is being played), if the electronic device detects the second operation, the electronic device may draw, after displaying the first start interface (that is, the start animation has been played), the first exit interface at the second layer to display the first exit interface.

In this embodiment of this application, if the electronic device detects, in a process of starting the first application, an operation that the user exits the first application, the electronic device may first display the first exit interface and cache the operation of the user, and after the first application is started, perform the operation of exiting the first application. Because displaying of the first exit interface by the electronic device is no longer coupled to a life cycle of an application, the first exit interface is no longer lost, to improve a touch sensitivity of the electronic device, and improve user experience.

Optionally, in some embodiments, if the second operation is the operation of closing the first application, a process of exiting the first application is a process of closing the first application. If the electronic device detects, in the process of closing the first application in the foregoing embodiment, a third operation that the user starts an application, the method 500 further includes:
creating a second window, where the second window is a preview window of the first application, the second window includes a fourth layer and a fifth layer, the fourth layer is used for an animation operation, the fourth layer is mounted on the screen node, and the fifth layer is mounted at the fourth layer;
drawing the first start interface at the fifth layer;
displaying the first start interface;
caching the third operation;
after the first application is closed, performing the third operation to create a sixth layer and start the first application; and
replacing the fifth layer with the sixth layer, to display the first interface of the first application, where the first interface of the first application is drawn at the sixth layer.

For example, the third operation may be an operation that the user taps an application icon.

When closing the application, the electronic device detects the operation that the user starts the application, and the electronic device creates the second window, and draws the first start interface in the second window to display the first start interface. Because the electronic device is in the process of closing the first application in this case, the electronic device may cache the third operation of starting the first application. After the electronic device completes closing of the first application, a state of the first application is a closed state, and the state does not correspond to the cached third operation. In this case, the electronic device may perform the third operation to start the application, and create the sixth layer to replace the fifth layer in the second window to display the first interface of the first application.

In this embodiment of this application, if the electronic device detects, in the process of closing the application, the third operation that the user starts the application, the electronic device may first display the first start interface and cache the third operation of the user, and after the application is closed, perform the third operation of starting the first application, to avoid a problem that a final state of the first application is inconsistent with the third operation of the user because the electronic device discards the third operation, improve a touch sensitivity of the electronic device, and improve user experience.

It should be understood that, in this embodiment, for brevity, a case in which the electronic device displays the start interface and the foregoing case in which the electronic device displays the exit interface are not described herein again.

Optionally, in some embodiments, if the second operation is the operation of exiting the first application to the background, a process of exiting the first application is a process of exiting the first application to the background. If the electronic device detects, in the process of exiting the first application to the background in the foregoing embodiment, a third operation that the user starts an application, the method 500 further includes:
displaying the first interface of the first application;
caching the third operation; and
after the first application is exited to the background, performing the third operation to start the first application.

When the electronic device exits the first application to the background, the electronic device detects the operation that the user starts the first application, and the electronic device may display the first interface of the first application in an animation form. Because the electronic device is in the process of exiting the first application to the background, the electronic device may cache the third operation of starting the first application. When the electronic device completes exiting of the first application to the background, a state of the first application is an exiting to the background state, and the state does not correspond to the cached third operation. In this case, the electronic device may perform the third operation to start the application.

In this embodiment of this application, if the electronic device detects, in a process of exiting the first application to the background, the third operation that the user starts the first application, the electronic device may first display the first interface of the first application and cache the third operation of the user, and after the first application is exited to the background, perform the third operation of starting the first application, to avoid a problem that a final state of the first application is inconsistent with the third operation of the user because the electronic device discards the third operation, improve a touch sensitivity of the electronic device, and improve user experience.

Optionally, in some embodiments, if the second operation is the operation of exiting the first application to the background, a process of exiting the first application is a process of exiting the first application to the background. If the electronic device detects, in the process of exiting the first application to the background in the foregoing embodiment, a third operation that the user starts an application, the method 500 further includes:
displaying the first interface of the first application;
caching the third operation;
when the electronic device is still in the process of exiting the first application to the background and a fourth operation that the user exits the first application to the background is further detected, drawing the interface at the third layer in response to the fourth operation;
displaying the first exit interface;
caching the fourth operation;
after the electronic device exits the first application to the background, determining, based on a sequence of performing the third operation and the fourth operation by the user, that an operation of the user is the fourth operation; and
discarding the fourth operation.

When the electronic device exits the first application to the background, the electronic device detects the third operation that the user starts the first application, and the electronic device may display the first interface of the first application. Because the electronic device is in the process of exiting the first application to the background in this case, the electronic device may first cache the third operation of starting the first application. The electronic device is in the process of exiting the first application to the background in this case, and the electronic device further detects the fourth operation that the user exits the first application to the background. The electronic device may draw the first exit interface at the third layer, so that the electronic device may display the first exit interface. After the electronic device completes exiting of the first application to the background, a state of the first application is an exiting to the background state, and the electronic device caches a total of two operations: the third operation and the fourth operation. The fourth operation is a latest operation. In this case, it is determined that the fourth operation is an operation of the user. In addition, because the fourth operation corresponds to the state of the first application, the electronic device may discard the fourth operation.

In this embodiment of this application, if the electronic device detects, in a process of exiting the first application to the background, the third operation that the user starts the first application, the electronic device may first display the first interface of the first application in an animation form and cache the third operation of the user. If the electronic device further detects the fourth operation that the user exits the first application to the background and the electronic device is still in the process of exiting the first application to the background, the electronic device may display the first exit interface again and cache the fourth operation, to improve a touch sensitivity of the electronic device, and improve user experience. In addition, after the first application is exited to the background, it is determined that the fourth operation is an operation of the user. In addition, because the fourth operation corresponds to a state of the first application, the fourth operation may be discarded, to ensure that the state of the first application corresponds to a latest operation of the user.

Optionally, in some embodiments, if the second operation is the operation of exiting the first application to the background, a process of exiting the first application is a process of exiting the first application to the background. If the electronic device detects, in the process of exiting the first application to the background in the foregoing embodiment, a third operation that the user starts an application, the method 500 further includes:
displaying the first interface of the first application;
caching the third operation;
when the electronic device is still in the process of exiting the first application to the background and a fifth operation that the user closes the first application is detected, replacing the third layer with the second layer in response to the fifth operation;
drawing a first exit interface at the second layer;
displaying the first exit interface;
caching the fifth operation;
after the electronic device exits the first application to the background, determining, based on a sequence of performing the third operation and the fifth operation by the user, that an operation of the user is the fifth operation; and
performing the fifth operation to close the first application.

When the electronic device exits the first application to the background, the electronic device detects the third operation that the user starts the application, and the electronic device may display the first interface of the first application. Because the electronic device is in the process of exiting the first application to the background in this case, the electronic device may first cache the third operation of starting the first application. The electronic device is in the process of exiting the first application to the background in this case, and the electronic device further detects the fifth operation that the user closes the first application. The electronic device may replace the third layer with the second layer, and draw the first exit interface at the second layer, so that the electronic device may display the first exit interface. After the electronic device completes exiting of the first application to the background, a state of the first application is an exiting to the background state, and the electronic device caches a total of two operations: the third operation and the fifth operation. The fifth operation is a latest operation. In this case, it is determined that the fifth operation is an operation of the user. In addition, because the fifth operation does not correspond to the state of the first application, the electronic device may perform the fifth operation to close the first application.

In this embodiment of this application, if the electronic device detects, in a process of exiting the first application to the background, the third operation that the user starts the first application, the electronic device may first display the first interface of the first application in an animation form and cache the third operation of the user. If the electronic device further detects the fifth operation that the user closes the first application and the electronic device is still in the process of exiting the first application to the background, the electronic device may display the first exit interface again and cache the fifth operation, to improve a touch sensitivity of the electronic device, and improve user experience. In addition, after the first application is exited to the background, it is determined that the fifth operation is an operation of the user. In addition, because the fifth operation does not correspond to a state of the first application, the fifth operation may be performed, to ensure that the state of the first application corresponds to a latest operation of the user.

Optionally, in some embodiments, if the second operation is the operation of exiting the first application to the background, a process of exiting the first application is a process of exiting the first application to the background. If the electronic device detects, in the process of exiting the first application to the background in the foregoing embodiment, a sixth operation that the user starts a second application, the method 500 further includes:
creating a third window, where the third window is a preview window of the second application, the third window includes a seventh layer and an eighth layer, the seventh layer is used for an animation operation, the seventh layer is mounted on the screen node, and the eighth layer is mounted at the seventh layer;
drawing a second start interface at the eighth layer;
displaying the second start interface;
caching the sixth operation;
after the first application is exited to the background, performing the sixth operation to create a ninth layer and start the second application; and
replacing the eighth layer with the ninth layer, to display a first interface of the second application, where the first interface of the second application is drawn at the ninth layer.

When the electronic device exits the first application to the background, the electronic device detects the sixth operation that the user starts a second application, the electronic device may create a third window, and draw a second start interface in the third window to display the second start interface. The second start interface is a start interface corresponding to the second application. Because the electronic device is in a process of exiting the first application to the background in this case, the electronic device may first cache the sixth operation of starting the second application. After completing exiting the first application to the background, the electronic device performs the sixth operation to create the ninth layer and start the second application, and then replaces the eighth layer with the ninth layer. A first interface of the second application is drawn at the ninth layer, so that the electronic device can display the first interface of the second application.

In this embodiment of this application, if the electronic device detects, in a process of exiting the first application to the background, the sixth operation that the user starts a second application, the electronic device may first display the second start interface in an animation form and cache the sixth operation of the user. After the first application is exited to the background, the electronic device performs the sixth operation, to ensure that the sixth operation is performed.

Optionally, in some embodiments, if the second operation is the operation of closing the first application, a process of exiting the first application is a process of closing the first application. If the electronic device detects, in the process of closing the first application in the foregoing embodiment, a third operation that the user starts the first application, the method 500 further includes:
creating a second window, where the second window is a preview window of the first application, the third window includes a fourth layer and a fifth layer, the fourth layer is used for an animation operation, the fourth layer is mounted on the screen node, and the fifth layer is mounted at the fourth layer;
drawing the first start interface at the fifth layer;
displaying the first start interface;
caching the third operation;
when the electronic device is still in the process of closing the first application and a fifth operation that the user closes the first application is further detected, drawing the first exit interface at the fifth layer in response to the fifth operation;
displaying the first exit interface;
caching the fifth operation;
after the first application is closed, determining, based on a sequence of performing the third operation and the fifth operation by the user, that an operation of the user is the fifth operation; and
discarding the fifth operation.

When closing the first application, the electronic device detects the third operation that the user starts the first application. The electronic device may create the second window, and draw the first start interface in the second window to display the first start interface. Because the electronic device is in the process of closing the first application is this case, the electronic device may first cache the third operation of starting the first application. The electronic device is in the process of closing the first application in this case, and the electronic device further detects the fifth operation that the user closes the first application. The electronic device may draw the first exit interface at the fifth layer, so that the electronic device may display the first exit interface. After the electronic device closes the first application and exits the first application to the background, a state of the first application is a closed state, and the electronic device caches a total of two operations: the third operation and the fifth operation. The fifth operation is a latest operation. In this case, it is determined that the fifth operation is an operation of the user. In addition, because the fourth operation corresponds to the state of the first application, the electronic device may discard the fifth operation.

In this embodiment of this application, if the electronic device detects, in a process of closing the first application, the third operation that the user starts the first application, the electronic device may create the second window to display the first start interface and cache the third operation of the user. If the electronic device further detects the fifth operation that the user closes the first application and the electronic device is still in the process of closing the first application, the electronic device may display the first exit interface again and cache the fifth operation, to improve a touch sensitivity of the electronic device, and improve user experience. In addition, after the first application is closed, it is determined that the fifth operation is an operation of the user. In addition, because the fifth operation corresponds to a state of the first application, the fifth operation may be discarded, to ensure that the state of the first application corresponds to a latest operation of the user.

Optionally, in some embodiments, if the electronic device detects, in a process of performing S504, a second operation that the user exits the application, the method 500 further includes:
drawing a first exit interface at the second layer;
displaying the first exit interface;
caching the second operation;
when the electronic device is still in the process of loading the application process of the first application and a third operation that the user starts the first application is detected, drawing the first start interface at the second layer in response to the third operation;
displaying the first start interface;
caching the third operation;
after the application process of the first application is loaded, determining, based on a sequence of performing the second operation and the third operation by the user, that an operation of the user is the third operation; and
discarding the third operation.

When loading the application process, the electronic device detects the second operation that the user exits the first application, and the electronic device may draw the first exit interface at the second layer, and send the first exit interface to the screen for display at the first layer, so that the electronic device may display the first exit interface. Because the electronic device is in the process of loading the application process in this case, the electronic device may first cache the second operation of exiting the first application. The electronic device is in the process of loading the application process in this case, and the electronic device detects the third operation that the user starts the first application. The electronic device may draw the first start interface at the second layer, and send the first start interface to the screen for display at the first layer, so that the electronic device may display the first start interface. After the electronic device completes loading of the application process, a state of the application is a started state, and the electronic device caches a total of two operations: the second operation and the third operation. The third operation is a latest operation. In this case, it is determined that the third operation is an operation of the user. In addition, because the third operation corresponds to the state of the first application, the electronic device may discard the third operation.

In this embodiment of this application, if the electronic device detects, in a process of loading the application process, the second operation that the user exits the first application, the electronic device may first display the first exit interface and cache the third operation of the user. If the electronic device further detects the fourth operation that the user exits the first application and the electronic device is still in the process of exiting the first application, the electronic device may display the first exit interface again and cache the fourth operation, to improve a touch sensitivity of the electronic device, and improve user experience. In addition, after the first application is exited, it is determined that the fourth operation is an operation of the user. In addition, because the fourth operation corresponds to a state of the first application, the fourth operation may be discarded, to ensure that the state of the application corresponds to a latest operation of the user.

The foregoing describes the window management method provided in embodiments of this application. The following describes an internal data flow direction when the electronic device performs the window management method in embodiments of this application.

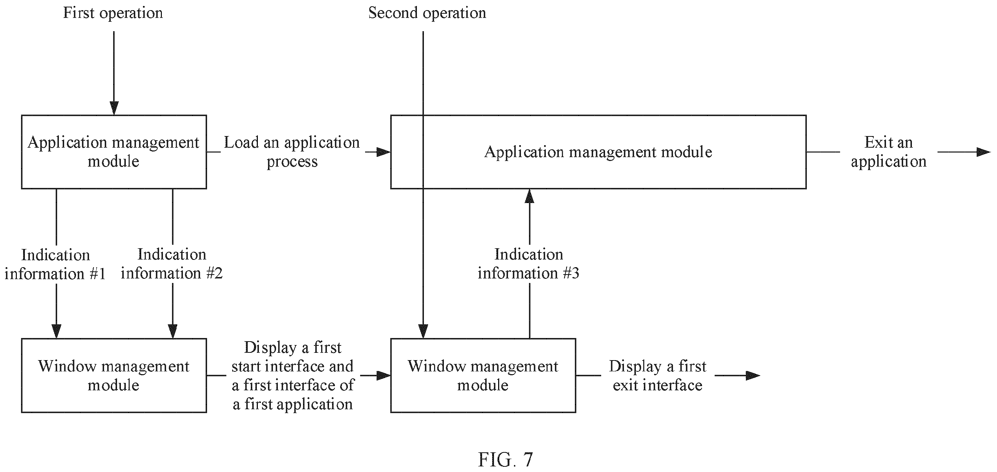

FIG. 7 is a diagram of an internal data flow direction in a window management method according to an embodiment of this application.

As shown in FIG. 7, an electronic device includes an application management module and a window management module. When a user performs a first operation of starting a first application, in response to the first operation, the application management module may load an application process of the first application, and send indication information #1 and indication information #2 to the window management module. The indication information #1 indicates the window management module to display a first start interface, and the indication information #2 indicates to display (show) a window. After receiving the indication information #1 and the indication information #2, the window management module may create a first window, and display a first start interface. A state of the first window is a displayed state. The first window includes a first layer and a second layer. The first layer is mounted on a screen node, and is used for an animation operation. The second layer is mounted at the first layer, and the first start interface is drawn at the second layer.

After the application management module completes loading of the application process of the first application, the window management module may create the third layer, and replace the second layer with the third layer, to display a first interface of the first application.

After the application management module completes loading of the application process of the first application, the user performs a second operation of exiting the first application. If the second operation is an operation of closing the first application, in response to the second operation, the window management module may create the third layer to replace the second layer, and send indication information #3 to the application management module. The first interface of the first application is drawn at the third layer. The indication information #3 indicates the application management module to close the first application. After receiving the indication information #3, the application management module may close the first application.

If the second operation is an operation of exiting the first application to the background, in response to the second operation, the window management module may draw a first exit interface at the second layer, and send the indication information #3 to the application management module. The indication information #3 indicates the application management module to exit the first application to the background. After receiving the indication information #3, the application management module may exit the first application to the background.

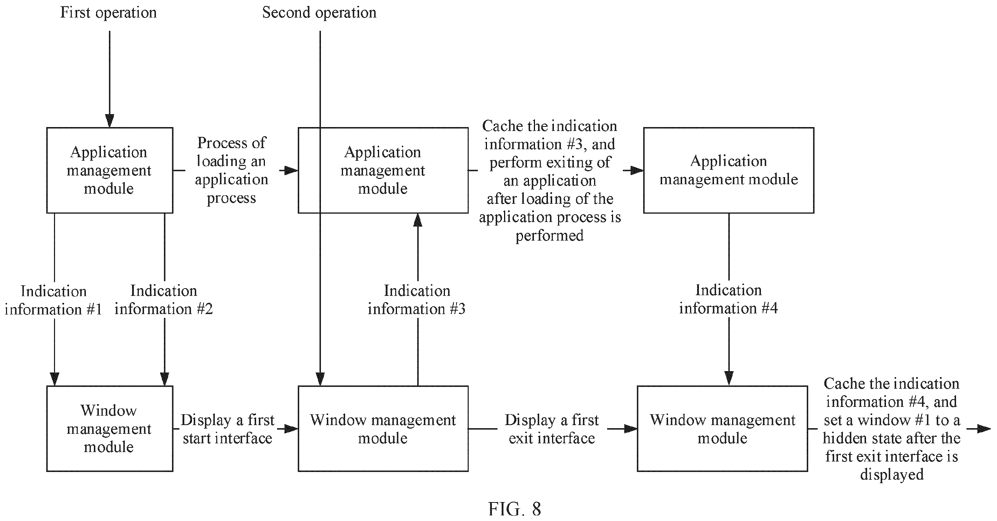

FIG. 8 is a diagram of an internal data flow direction in another window management method according to an embodiment of this application.

As shown in FIG. 8, an electronic device includes an application management module and a window management module. When a user performs a first operation of starting an application, in response to the first operation, the application management module may load an application process, and send indication information #1 and indication information #2 to the window management module. The indication information #1 indicates the window management module to display a start interface, and the indication information #2 indicates to display a window. After receiving the indication information #1 and the indication information #2, the window management module may create a first window, and display a first start interface. A state of the first window is a displayed state. The first window includes a first layer and a second layer. The first layer is mounted on a screen node, and is used for an animation operation. The second layer is mounted at the first layer, and the first start interface is drawn at the first layer. The window management module may further cache the indication information #2.

In a process in which the application management module loads the application process of the first application, the user performs a second operation of exiting the application. In response to the second operation, the window management module may draw a first exit interface at the second layer, and send indication information #3 to the application management module. The indication information #3 indicates the application management module to exit the first application. Because the application management module is loading the application process in this case, the application management module may cache the indication information #3. After the application management module completes loading of the application process, a state of the first application is a started state, and the indication information #3 indicates to exit the application. In this case, the application management module exits the first application based on the cached indication information #3. The application management module may send indication information #4 to the window management module in a process of exiting the first application. The indication information #4 indicates to hide a window #1. If the window management module is displaying a first exit image, the window management module may cache the indication information #4.

After the window management module displays the first exit image, that is, completes playing of the first exit animation, the window management module caches the indication information #2 and the indication information #4. Because the window management module finally displays the first exit interface, after completing displaying of the first exit interface, the window management module may set the window #1 to a hidden state based on the indication information #4.

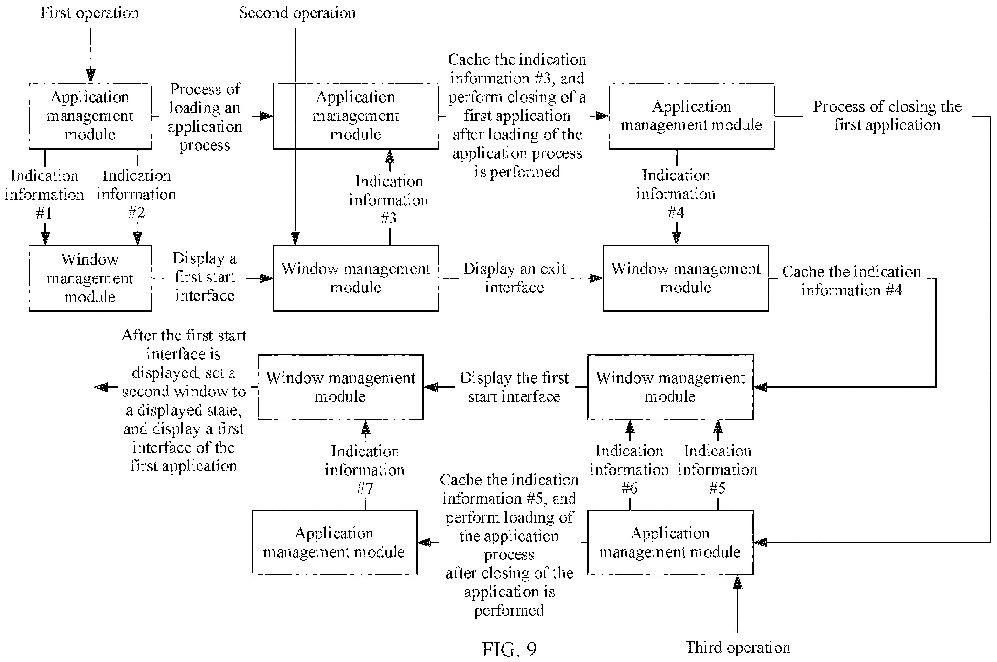

FIG. 9 is a diagram of an internal data flow direction in another window management method according to an embodiment of this application.

As shown in FIG. 9, an electronic device includes an application management module and a window management module. When a user performs a first operation of starting an application, in response to the first operation, the application management module may load an application process, and send indication information #1 and indication information #2 to the window management module. After receiving the indication information #1 and the indication information #2, the window management module may create a first window, and display a first start interface. A state of the first window is a displayed state. The window management module may further cache the indication information #2.

It should be understood that, for detailed descriptions of the indication information #1, the indication information #2, and the first window, refer to the foregoing descriptions. For brevity, details are not described herein again.

In a process in which the application management module loads an application process of a first application, the user performs a second operation of closing the first application. In response to the second operation, the window management module may draw a first exit interface at the second layer, and send indication information #3 to the application management module. The application management module may cache the indication information #3. The indication information #3 indicates the application management module to close the first application. After the application management module completes loading of a first application process, a state of the application is a started state, and the indication information #3 indicates to close the first application. In this case, the application management module closes the first application based on the cached indication information #3. The application management module may send indication information #4 to the window management module in a process of closing the first application. The indication information #4 indicates to destroy the first window. If the window management module is displaying the first exit interface, the window management module may cache the indication information #4, and destroy the first window after the window management module displays the first exit interface. After destroying the first window, the window management module no longer caches the indication information #2 and the indication information #4.

In a process in which the application management module closes an application, the user performs a third operation of starting the application. The application management module sends indication information #5 and indication information #6 to the window management module in response to the third operation. The indication information #5 indicates the window management module to display the first start interface, and the indication information #6 indicates to display (show) a window. After receiving the indication information #5 and the indication information #6, the window management module may create a second window, and display the first start interface. A state of the second window is a displayed state. The second window includes a fourth layer and a fifth layer. The fourth layer is mounted on a screen node, and is used for an animation operation. The fifth layer is mounted at the fourth layer, and the first start interface is drawn at the fifth layer. Because the application management module is still in the process of closing the first application, the application management module may cache the third operation. After the application management module closes the first application, because the third operation does not correspond to a state of the first application, the application management module may load the application process again based on the third operation.

When loading the application process again, the application management module may send indication information #7 to the window management module. The indication information #7 indicates to display a window. If the window management module is displaying the start interface, the window management module may cache the indication information #7.

After the application management module completes loading of the application process of the first application, the window management module may create the sixth layer, and replace the fifth layer with the sixth layer, to display a first interface of the first application.

After the window management module displays the first start interface, the window management module caches the indication information #6 and the indication information #7. Because the window management module finally displays the first start interface in the second window, after displaying the first start interface, the window management module may set the second window to the displayed state based on the indication information #7.

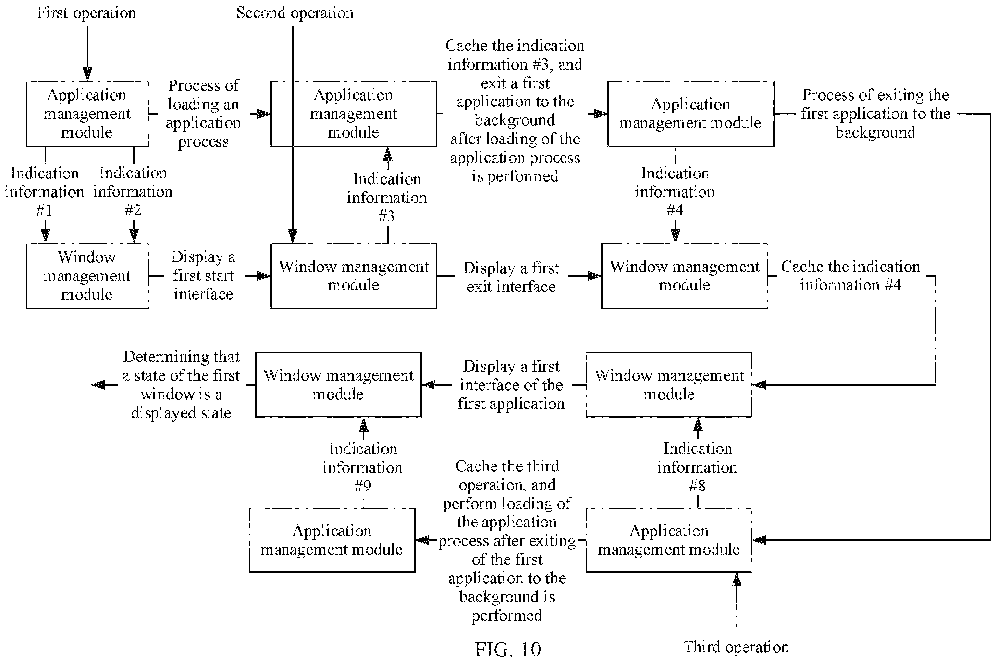

FIG. 10 is a diagram of an internal data flow direction in another window management method according to an embodiment of this application.

As shown in FIG. 10, an electronic device includes an application management module and a window management module. When a user performs a first operation of starting an application, in response to the first operation, the application management module may load an application process, and send indication information #1 and indication information #2 to the window management module. After receiving the indication information #1 and the indication information #2, the window management module may create a first window, and display a first start interface. A state of the first window is a displayed state. The window management module may further cache the indication information #2.

It should be understood that, for detailed descriptions of the indication information #1, the indication information #2, and the first window, refer to the foregoing descriptions. For brevity, details are not described herein again.

In a process in which the application management module loads the application process of the first application, the user performs a second operation of exiting the first application to the background. In response to the second operation, the window management module may draw a first exit interface at the second layer, and send indication information #3 to the application management module. The indication information #3 indicates the application management module to exit the first application to the background. The application management module may cache the indication information #3. After the application management module completes loading of the first application process, a state of the application is a started state, and the indication information #3 indicates to exit the first application to the background. In this case, the application management module exits the first application to the background based on the cached indication information #3. The application management module may send indication information #4 to the window management module in a process of exiting the first application to the background. The indication information #4 indicates to hide the first window. If the window management module is displaying a first exit image, the window management module may cache the indication information #4.

In a process in which the application management module exits the first application process to the background, the user performs a third operation of starting the application. The application management module sends indication information #8 to the window management module in response to the third operation. The indication information #5 indicates the window management module to display the first interface of the first application. Because the application management module is still in the process of closing the first application, the application management module may cache the third operation. After the application management module closes the first application, because the third operation does not correspond to a state of the first application, the application management module may start the application again based on the third operation.

When starting the application again, the application management module may send indication information #9 to the window management module. The indication information #9 indicates to display a window. If the window management module is displaying the first start interface, the window management module may cache the indication information #6.

After the window management module displays the first start interface, the window management module caches the indication information #2, the indication information #4, and the indication information #9. Because the window management module finally displays the first start interface in the first window, after displaying the first start interface, the window management module may set the first window to the displayed state based on the indication information #9.

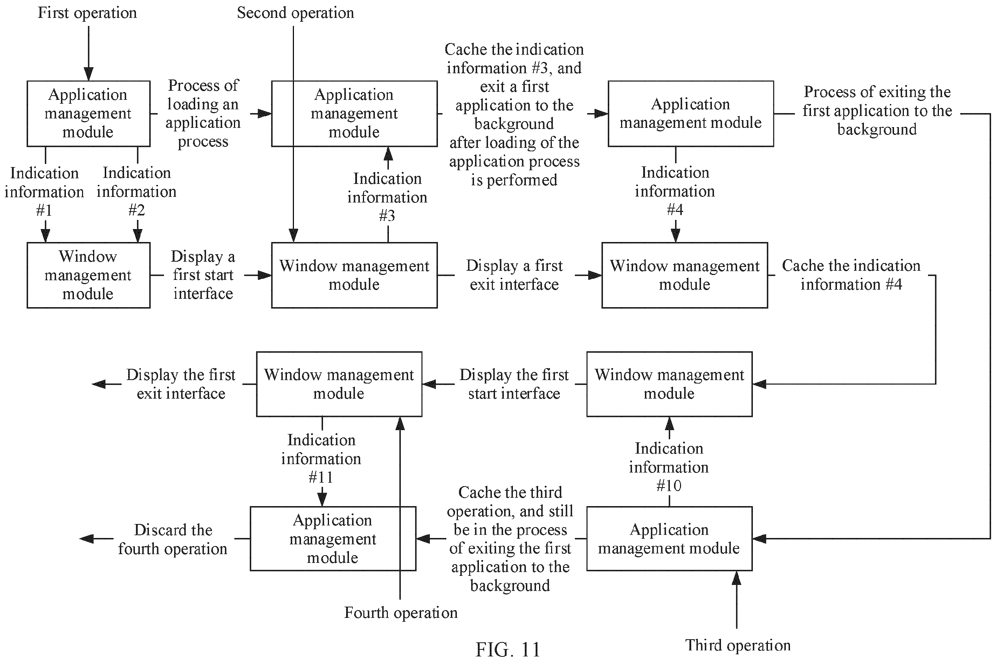

FIG. 11 is a diagram of an internal data flow direction in another window management method according to an embodiment of this application.

As shown in FIG. 11, an electronic device includes an application management module and a window management module. When a user performs a first operation of starting an application, in response to the first operation, the application management module may load an application process, and send indication information #1 and indication information #2 to the window management module. After receiving the indication information #1 and the indication information #2, the window management module may create a first window, and display a first start interface. A state of the first window is a displayed state. The window management module may further cache the indication information #2.

It should be understood that, for detailed descriptions of the indication information #1, the indication information #2, and the first window, refer to the foregoing descriptions. For brevity, details are not described herein again.

In a process in which the application management module loads an application process of a first application, the user performs a second operation of exiting the first application to the background. In response to the second operation, the window management module may draw a first exit interface at a second layer, and send indication information #3 to the application management module. The indication information #3 indicates the application management module to exit the first application to the background. The application management module may cache the indication information #3. After the application management module completes loading of the first application process, a state of the application is a started state, and the indication information #3 indicates to exit the first application to the background. In this case, the application management module exits the first application to the background based on the cached indication information #3. The application management module may send indication information #4 to the window management module in a process of exiting the first application to the background. The indication information #4 indicates to hide the first window. If the window management module is displaying a first exit image, the window management module may cache the indication information #4.

In a process in which the application management module exits the first application process to the background, the user performs a third operation of starting the first application. The application management module sends indication information #10 to the window management module in response to the third operation. The indication information #10 indicates the window management module to display the first start interface. Because the application management module is still in a process of closing the first application, the application management module may cache the third operation.

When the application management module is still in the process of closing the first application, the user performs again a fourth operation of exiting the first application to the background. In response to the fourth operation, the window management module may display the first exit interface, and send indication information #11 to the application management module. The indication information #11 indicates the application management module to exit the first application to the background.

After the application management module completes exiting of the first application to the background for a first time, the application management module caches the third operation and the fourth operation. The fourth operation is a latest operation of the user, and the fourth operation corresponds to the state of the first application. In this case, the application management module may discard the fourth operation.

After the window management module displays the first exit interface, the window management module caches the indication information #2 and the indication information #4. Because the window management module finally displays a first recommendation interface in the first window, after displaying the first exit interface, the window management module may set the first window to a hidden state based on the indication information #4.

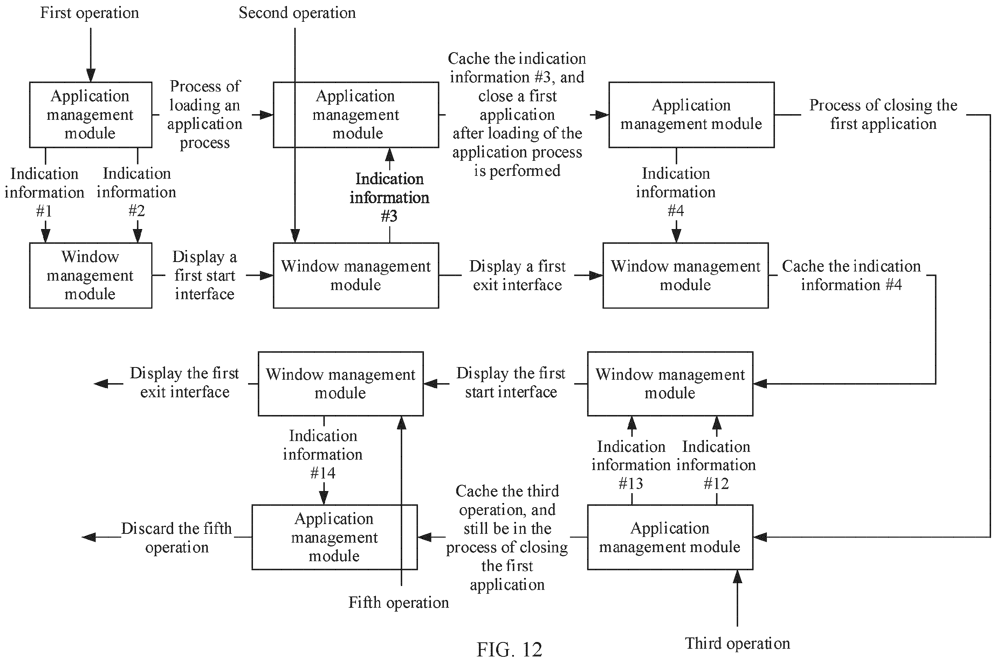

FIG. 12 is a diagram of an internal data flow direction in another window management method according to an embodiment of this application.

As shown in FIG. 12, an electronic device includes an application management module and a window management module. When a user performs a first operation of starting an application, in response to the first operation, the application management module may load an application process, and send indication information #1 and indication information #2 to the window management module. After receiving the indication information #1 and the indication information #2, the window management module may create a first window, and display a first start interface. A state of the first window is a displayed state. The window management module may further cache the indication information #2.

It should be understood that, for detailed descriptions of the indication information #1, the indication information #2, and the first window, refer to the foregoing descriptions. For brevity, details are not described herein again.

In a process in which the application management module loads an application process of a first application, the user performs a second operation of closing the first application. In response to the second operation, the window management module may draw a first exit interface at the second layer, and send indication information #3 to the application management module. The application management module may cache the indication information #3. The indication information #3 indicates the application management module to close the first application. After the application management module completes loading of the first application process, a state of the application is a started state, and the indication information #3 indicates to close the first application. In this case, the application management module closes the first application based on the cached indication information #3. The application management module may send indication information #4 to the window management module in a process of closing the first application. The indication information #4 indicates to destroy the first window. If the window management module is displaying the first exit interface, the window management module may cache the indication information #4, and destroy the first window after the window management module displays the first exit interface. After destroying the first window, the window management module no longer caches the indication information #2 and the indication information #4.

In the process in which the application management module closes the application, the user performs a third operation of starting the application. The application management module sends indication information #12 and indication information #13 to the window management module in response to the third operation. The indication information #12 indicates the window management module to display a first start interface, and the indication information #13 indicates to display (show) a window. After receiving the indication information #12 and the indication information #13, the window management module may create a second window, and display the first start interface. A state of the second window is a displayed state. The second window includes a fourth layer and a fifth layer. The fourth layer is mounted on a screen node, and is used for an animation operation. The fifth layer is mounted at the fourth layer, and the first start interface is drawn at the fifth layer. Because the application management module is still in a process of closing the first application, the application management module may cache the third operation.

When the application management module is still in the process of closing the first application, the user performs again a fifth operation of closing the first application. In response to the fifth operation, the window management module may display the first exit interface, and send indication information # 14 to the application management module. The indication information #14 indicates to close the first application.

After the application management module closes the first application for a first time, the third operation and the fifth operation are cached. The fifth operation is a latest operation of the user, and the fifth operation corresponds to a state of the first application. In this case, the application management module may discard the fifth operation.

After the window management module displays the first exit interface, because the application management module has closed the first application, the window management module may destroy the first window.

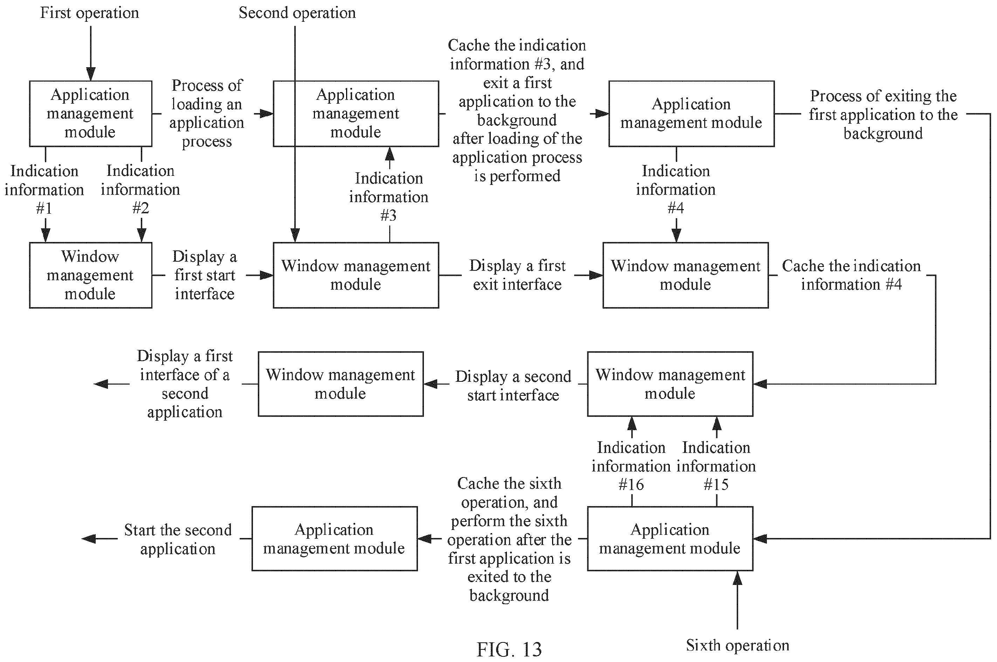

FIG. 13 is a diagram of an internal data flow direction in another window management method according to an embodiment of this application.

As shown in FIG. 13, an electronic device includes an application management module and a window management module. When a user performs a first operation of starting an application, in response to the first operation, the application management module may load an application process, and send indication information #1 and indication information #2 to the window management module. After receiving the indication information #1 and the indication information #2, the window management module may create a first window, and display a first start interface. A state of the first window is a displayed state. The window management module may further cache the indication information #2.

It should be understood that, for detailed descriptions of the indication information #1, the indication information #2, and the first window, refer to the foregoing descriptions. For brevity, details are not described herein again.

In a process in which the application management module loads an application process of a first application, the user performs a second operation of closing the first application. In response to the second operation, the window management module may draw a first exit interface at a second layer, and send indication information #3 to the application management module. The application management module may cache the indication information #3. The indication information #3 indicates the application management module to close the first application. After the application management module completes loading of the first application process, a state of the application is a started state, and the indication information #3 indicates to close the first application. In this case, the application management module closes the first application based on the cached indication information #3. The application management module may send indication information #4 to the window management module in a process of closing the first application. The indication information #4 indicates to destroy the first window. If the window management module is displaying the first exit interface, the window management module may cache the indication information #4, and destroy the first window after the window management module displays the first exit interface. After destroying the first window, the window management module no longer caches the indication information #2 and the indication information #4.

In a process in which the application management module exits the first application to the background, the user performs a sixth operation of starting a second application, and the application management module sends indication information #15 and indication information #16 to the window management module in response to the sixth operation. The indication information #15 indicates the window management module to display a second start interface, the second start interface is a start interface of the second application, and the indication information #16 indicates to display (show) a window. After receiving the indication information #15 and the indication information #17, the window management module may create a third window, and display the second start interface. A state of the third window is a displayed state. The third window includes a seventh layer and an eighth layer. The seventh layer is mounted on a screen node, and is used for an animation operation. The eighth layer is mounted at the seventh layer. The second start interface is drawn at the eighth layer. Because the application management module is still in a process of exiting the first application to the background, the application management module may cache the sixth operation.

After the application management module loads the application process of the first application, the window management module may create a ninth layer, and replace the eighth layer with the ninth layer, to display a first interface of the second application. A first interface of the second application is drawn at the ninth layer.

After the application management module exits the first application to the background, the sixth operation is performed. In other words, an application process of the second application is loaded.

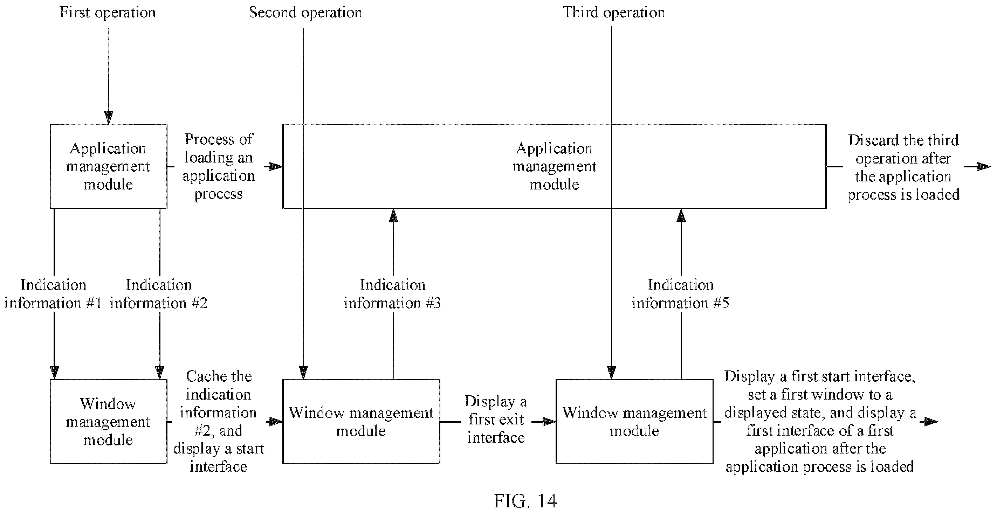

FIG. 14 is a diagram of an internal data flow direction in another window management method according to an embodiment of this application.

As shown in FIG. 14, an electronic device includes an application management module and a window management module. When a user performs a first operation of starting a first application, in response to the first operation, the application management module may load an application process, and send indication information #1 and indication information #2 to the window management module. After receiving the indication information #1 and the indication information #2, the window management module may create a first window, and display a start interface. A state of the first window is a displayed state. The window management module may further cache the indication information #2.

It should be understood that, for detailed descriptions of the indication information #1, the indication information #2, and the first window, refer to the foregoing descriptions. For brevity, details are not described herein again.

In a process in which the application management module loads the application process, the user performs a second operation of exiting the first application. In response to the second operation, the window management module may draw an exit interface at a second layer, and send indication information #3 to the application management module. The application management module may cache the indication information #3. When the application management module is still in a process of completing loading of the application process, the user further performs a third operation of starting the first application. In response to the third operation, the window management module may draw a first start interface at the second layer, and send indication information #5 to the application management module. Because the application management module is in the process of loading the application process in this case, the application management module may cache the indication information #5. After the application management module completes loading of the application process, the application management module caches the indication information #3 and the indication information #5. The indication information #5 is a latest operation of the user, and the indication information #5 corresponds to a state of the first application. In this case, the application management module may discard the third operation.

After the window management module displays the first start interface, the window management module caches the indication information #2. Because the window management module finally displays the first start interface, after displaying the first start interface, the window management module may set the first window to a displayed state based on the indication information #2.

After the application management module completes loading of the application process of the first application, the window management module may create a third layer, and replace the second layer with the third layer, to display a first interface of the first application.

The foregoing mainly describes, from a perspective of the electronic device, the window management method provided in embodiments of this application and the internal data flow direction in the window management method provided in embodiments of this application. It can be understood that, to implement the foregoing functions, the electronic device includes corresponding hardware structures and/or software modules for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

When each functional module is obtained through division based on each corresponding function, FIG. 12 is a diagram of a structure of an electronic device 1500 according to an embodiment of this application. As shown in FIG. 12, the electronic device 1500 includes an application management module 1510 and a window management module 1520.

The window management module 1520 is configured to create a first window in response to a first operation that a user starts a first application. The first window is a preview window of the first application, the first window includes a first layer and a second layer, the first layer is used for an animation operation, the first layer is mounted on a screen node, and the second layer is mounted at the first layer.

The window management module 1520 is further configured to draw a start interface at the second layer.

The window management module 1520 is further configured to display the start interface.

The application management module 1510 is configured to load an application process of the application, to create a third layer and start the application.

The window management module 1520 is further configured to replace the second layer with the third layer, to display a first interface of the application. The first interface of the application is drawn at the third layer.

It should be noted that all related content of the steps in the foregoing method embodiments may be cited in function description of corresponding functional modules. Details are not described herein again. The electronic device provided in embodiments of this application is configured to perform the window management method, and therefore, can achieve a same effect as the foregoing descriptions.

An embodiment of this application further provides an electronic device, including a processor, a memory, an application, and a computer program. The foregoing components may be connected through one or more communication buses. The one or more computer programs are stored in the memory and are configured to be executed by the one or more processors. The one or more computer programs include instructions, and the instructions may be used to enable the electronic device to perform the steps of the electronic device in the foregoing embodiments.

For example, the processor may be specifically the processor 110 shown in FIG. 1, and the memory may be specifically the internal memory 120 shown in FIG. 1 and/or the external memory connected to the electronic device.

An embodiment of this application further provides a chip. The chip includes a processor and a communication interface. The communication interface is configured to: receive a signal and transmit the signal to the processor. The processor processes the signal, so that the song list generation method in any one of the foregoing possible implementations is performed.

An embodiment further provides a computer-readable storage medium. The computer-readable storage medium stores computer instructions. When the computer instructions run on an electronic device, the electronic device is enabled to perform the foregoing related method steps to implement the song list generation method in the foregoing embodiments.

An embodiment further provides a computer program product. When the computer program product runs on a computer, the computer is enabled to perform the foregoing related steps, to implement the song list generation method in the foregoing embodiments.

According to the context, the term "when" or "after" used in the foregoing embodiments may be interpreted as a meaning of "if" or "after" or "in response to determining" or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, can be located in one place, or can be distributed on a plurality of network units. Some or all of the units may be selected based on an actual requirement, to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A window management method, wherein the method is applied to an electronic device, and the method comprises:
creating a first window in response to a first operation that a user starts a first application, wherein the first window is a preview window of the first application, the first window comprises a first layer and a second layer, the first layer is used for an animation operation, the first layer is mounted on a screen node, and the second layer is mounted at the first layer;
drawing a first start interface at the second layer;
displaying the first start interface;
loading an application process of the first application, to create a third layer and start the first application; and
replacing the second layer with the third layer, to display a first interface of the first application, wherein the first interface of the first application is drawn at the third layer.

2. The method according to claim 1, wherein a second operation that the user exits the first application is detected in a process of loading the application process of the first application, and the method further comprises:
drawing a first exit interface at the second layer;
displaying the first exit interface;
caching the second operation; and
after the application process of the first application is loaded, performing the second operation to exit the first application and hide the first window.

3. The method according to claim 2, wherein the second operation is an operation of closing the first application, a third operation that the user starts the first application is detected in a process of closing the first application, and the method further comprises:
creating a second window, wherein the second window is a preview window of the first application, the second window comprises a fourth layer and a fifth layer, the fourth layer is used for an animation operation, the fourth layer is mounted on the screen node, and the fifth layer is mounted at the fourth layer;
drawing the first start interface at the fifth layer;
displaying the first start interface;
caching the third operation;
after the first application is closed, performing the third operation to create a sixth layer and start the first application; and
replacing the fifth layer with the sixth layer, to display the first interface of the first application, wherein the first interface of the first application is drawn at the sixth layer.

4. The method according to claim 2, wherein the second operation is an operation of exiting the first application to the background, a third operation that the user starts the first application is detected in a process of exiting the first application to the background, and the method comprises:
displaying the first interface of the first application;
caching the third operation; and
after the first application is exited to the background, performing the third operation to start the first application.

5. The method according to claim 2, wherein the second operation is an operation of exiting the first application to the background, a third operation that the user starts the first application is detected in a process of exiting the first application to the background, and the method further comprises:
displaying the first interface of the first application;
caching the third operation;
when the electronic device is still in the process of exiting the application to the background and a fourth operation that the user exits the first application to the background is further detected, drawing the first exit interface at the third layer in response to the fourth operation;
displaying the first exit interface;
caching the fourth operation;
after the first application is exited to the background, determining, based on a sequence of performing the third operation and the fourth operation by the user, that an operation of the user is the fourth operation; and
discarding the fourth operation.

6. The method according to claim 2, wherein the second operation is an operation of exiting the first application to the background, a third operation that the user starts the first application is detected in a process of exiting the first application to the background, and the method further comprises:
displaying the first interface of the first application;
caching the third operation;
when the electronic device is still in the process of exiting the first application to the background and a fifth operation that the user closes the first application is detected, replacing the third layer with the second layer in response to the fifth operation;
drawing the first exit interface at the second layer;
displaying the first exit interface;
caching the fifth operation;
after the first application is exited to the background, determining, based on a sequence of performing the third operation and the fifth operation by the user, that an operation of the user is the fifth operation; and
performing the fifth operation to close the first application.

7. The method according to claim 2, wherein the second operation is an operation of closing the first application, a third operation that the user starts the first application is detected in a process of closing the first application, and the method further comprises:
creating a second window, wherein the second window is a preview window of the first application, the second window comprises a fourth layer and a fifth layer, the fourth layer is used for an animation operation, the fourth layer is mounted on the screen node, and the fifth layer is mounted at the fourth layer;
drawing the first start interface at the fifth layer;
displaying the first start interface;
caching the third operation;
when the electronic device is still in the process of closing the first application and a fifth operation that the user closes the first application is further detected, drawing the first exit interface at the fifth layer in response to the fifth operation;
displaying the first exit interface;
caching the fifth operation;
after the first application is closed, determining, based on a sequence of performing the third operation and the fifth operation by the user, that an operation of the user is the fifth operation; and
discarding the fifth operation.

8. The method according to claim 2, wherein the second operation is an operation of exiting the first application to the background, a sixth operation that the user starts a second application is detected in a process of exiting the first application to the background, and the method further comprises:
creating a third window, wherein the third window is a preview window of the second application, the third window comprises a seventh layer and an eighth layer, the seventh layer is used for an animation operation, the seventh layer is mounted on the screen node, and the eighth layer is mounted at the seventh layer;
drawing a second start interface at the eighth layer;
displaying the second start interface;
caching the sixth operation;
after the first application is exited to the background, performing the sixth operation to create a ninth layer and start the second application; and
replacing the eighth layer with the ninth layer, to display a first interface of the second application, wherein the first interface of the second application is drawn at the ninth layer.

9. The method according to claim 1, wherein a second operation that the user exits the first application is detected in a process of loading the application process of the first application, and the method further comprises:
drawing a first exit interface at the second layer;
displaying the first exit interface;
caching the second operation;
when the electronic device is still in the process of loading the application process of the first application and a third operation that the user starts the first application is detected, drawing the first start interface at the second layer in response to the third operation;
displaying the first start interface;
caching the third operation;
after the application process of the first application is loaded, determining, based on a sequence of performing the second operation and the third operation by the user, that an operation of the user is the third operation; and
discarding the third operation.

10. The method according to any one of claims 1 to 9, wherein after the application process of the first application is loaded, an operation that the user closes the first application is detected, and the method further comprises:
replacing the third layer with the second layer;
drawing the first exit interface at the second layer; and
displaying the first exit interface, and closing the application.

11. The method according to any one of claims 1 to 9, wherein after the application process of the first application is loaded, an operation that the user exits the first application to the background is detected, and the method further comprises:
drawing the first exit interface at the third layer; and
displaying the exit interface, and exiting the application to the background.

12. The method according to any one of claims 1 to 11, wherein the replacing the second layer with the third layer comprises:
replacing the second layer with the third layer after the first interface of the application is drawn at the third layer.

13. The method according to any one of claims 1 to 12, wherein the first exit interface is a screenshot of a second interface of the application or a preset interface.

14. An electronic device, comprising one or more processors and one or more memories, wherein the one or more memories store one or more computer programs, the one or more computer programs comprise instructions, and when the instructions are executed by the one or more processors, the method according to any one of claims 1 to 13 is performed.

15. A chip, wherein the chip comprises a processor and a communication interface, the communication interface is configured to: receive a signal, and transmit the signal to the processor, and the processor processes the signal, so that the method according to any one of claims 1 to 13 is performed.

16. A computer-readable storage medium, wherein the computer-readable storage medium stores computer instructions, and when the computer instructions are run on a computer, the method according to any one of claims 1 to 13 is performed.
